# EUROPEAN PATENT SPECIFICATION

(11) **EP 2 796 267 B1**
(45) Date of publication and mention of the grant of the patent: **06.11.2019**
(21) Application number: 14161514.6
(22) Date of filing: 25.03.2014
(51) Int. Cl.: B29C 45/17

(54) **Injection molding machine**
Spritzgießmaschine
Machine de moulage à injection

(30) Priority: 23.04.2013 JP 2013090490
(43) Date of publication of application: 29.10.2014
(73) Proprietor: SUMITOMO HEAVY INDUSTRIES, LTD., Tokyo 141-6025 (JP)
(72) Inventor: Miyatake, Tsutomu, Yokusuka-shi, Kanagawa 237-8555 (JP)
(74) Representative: Louis Pöhlau Lohrentz

(56) References cited:
- EP-A1- 1 726 426
- DE-A1- 19 608 135
- DE-A1-102010 015 820
- DE-T5-112008 000 836
- JP-A- H05 329 900
- US-A- 3 597 798
- US-A- 4 373 890
- US-B1- 6 719 553

## Description

### BACKGROUND OF THE INVENTION

### Field of the Invention

The present invention relates to an injection molding machine.

### Description of Related Art

An injection molding machine produces a molded product by filling a cavity space of a mold unit with a molten resin and solidifying the resin. The mold unit is configured to have a stationary mold and a movable mold, and the cavity space is formed between the stationary mold and the movable mold during mold clamping (for example, refer to Japanese Unexamined Patent Application Publication No. 2006-305945).

Document JPH05329900 describes an injection molding machine having four tie bars provided between a fixed platen and a clamping cylinder support. A movable platen is supported on said tie bars, and a clamping cylinder with a piston is provided on the rear part of the clamping cylinder support. The clamping cylinder support can be moved relatively to the tie bars by a moving device provided with adjusting nuts fitted with male screws on threaded ends of the tie bars. In this manner, the mold thickness can be changed, and a constant clamping stroke can be obtained only by adjusting the adjusting nuts.

German patent application DE 196 08 135 A1 discloses an injection molding machine in which a fixed platen and a movable platen are mounted on a frame. The movable platen consists of a mounting part and a force transmission part that are movably carried by the frame via rolling elements.

Similarly, US patent US 3 597 798 discloses an injection molding machine with a stationary platen mounted on a stationary support and a movable platen slidably positioned on tie rods.

Furthermore, patent documents EP 1 726 426 A1, DE 10 2010 015 820 A1, and DE 11 2008 000 836 T5 disclose injection molding machines comprising a movable platen and an attraction plate that are individually supported on a frame.

There is much room for improvement in balance of mold clamping force.

### SUMMARY OF THE INVENTION

The present invention is made in view of the above-described problem, and an object thereof is to provide an injection molding machine which can improve the balance of the mold clamping force.

According to an aspect of the present invention, in order to solve the above-described problem, there is provided an injection molding machine including a platen to which a mold is attached; and a mold space adjustment unit that performs mold space adjustment. The mold space adjustment unit has a main body which is connected to the platen by leaving a distance in a mold opening and closing direction, and a support which supports the main body. The support is longer than the main body in the mold opening and closing direction.

According to an aspect of the present invention, there is provided an injection molding machine which can improve balance of mold clamping force.

### BRIEF DESCRIPTION OF THE DRAWINGS

Fig. 1 illustrates a state of when mold opening is completed in an injection molding machine according to a first embodiment of the present invention.
Fig. 2 illustrates a state of when mold closing is completed in the injection molding machine according to the first embodiment of the present invention.
Fig. 3 illustrates a state of when mold clamping is completed in the injection molding machine according to the first embodiment of the present invention.
Fig. 4 illustrates a state of when a mold is replaced in the injection molding machine according to the first embodiment of the present invention.
Fig. 5 illustrates a mold space adjustment unit and a movable platen according to a second embodiment of the present invention.
Fig. 6 illustrates a mold space adjustment unit and a movable platen according to a third embodiment of the present invention.

### DETAILED DESCRIPTION OF THE INVENTION

Hereinafter, embodiments for embodying the present invention will be described with reference to drawings . In each drawing, the same or corresponding reference numerals are given to the same or corresponding configurations, and description thereof will be omitted. In addition, the description will be made by setting a movement direction of a movable platen (rightward direction in each drawing) when mold closing is performed to be a forward direction and a movement direction of the movable platen (leftward direction in each drawing) when mold opening is performed to be a rearward direction.

### First Embodiment

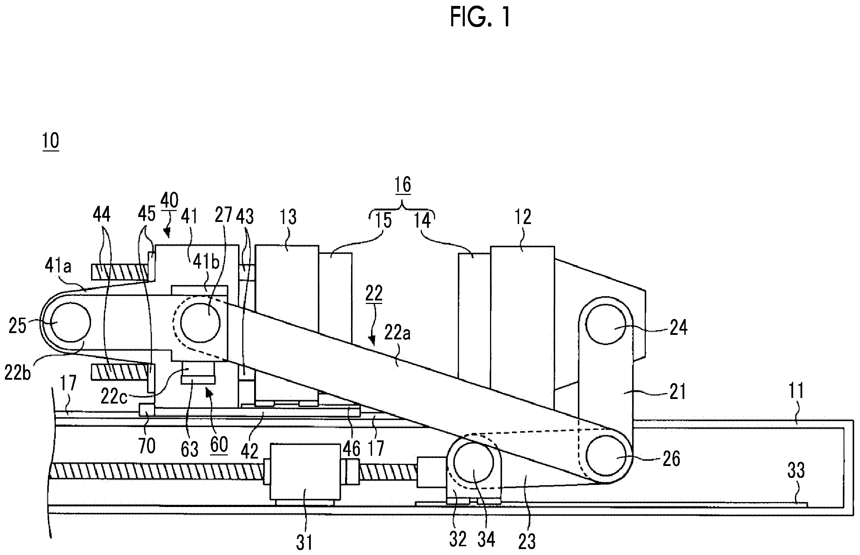

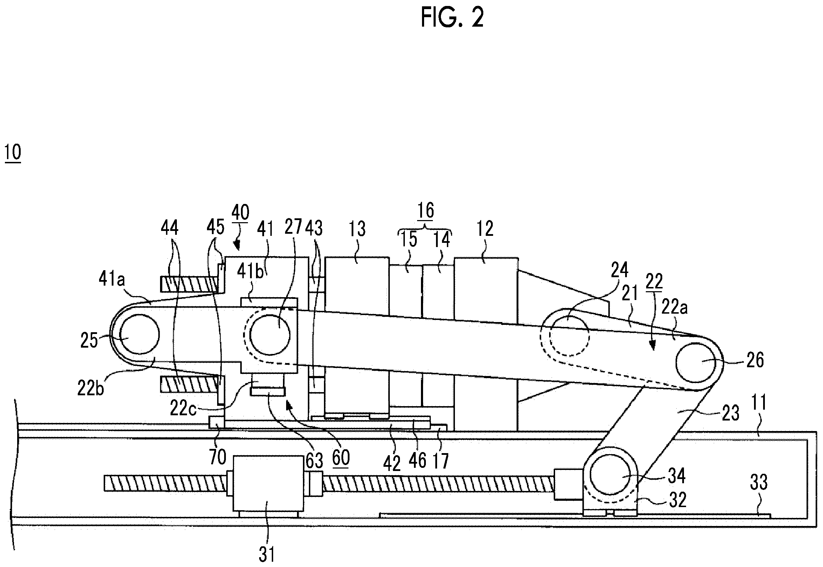

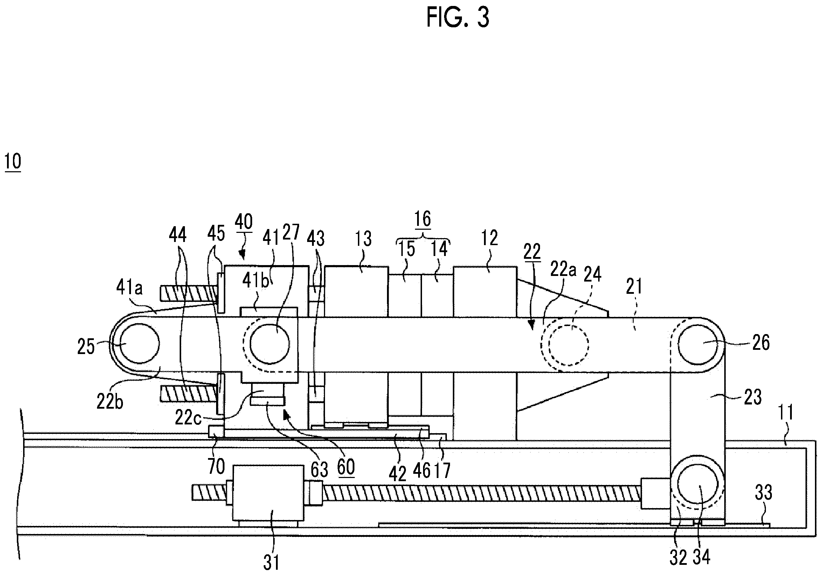

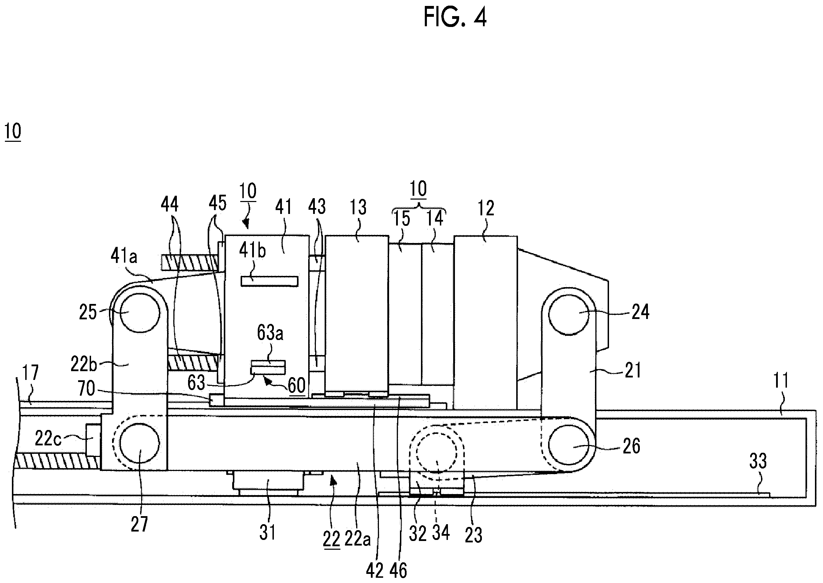

Fig. 1 illustrates a state of when the mold opening is completed in an injection molding machine according to a first embodiment of the present invention. Fig. 2 illustrates a state of when the mold closing is completed in the injection molding machine according to the first embodiment of the present invention. Fig. 3 illustrates a state of when mold clamping is completed in the injection molding machine according to the first embodiment of the present invention. Fig. 4 illustrates a state of when a mold is replaced in the injection molding machine according to the first embodiment of the present invention.

An injection molding machine 10 includes a frame 11, a stationary platen 12, a movable platen 13, a short link 21, a long link 22, a push rod 23, a mold clamping motor 31, a mold space adjustment unit 40, a first link lock mechanism 60 and a platen lock mechanism 70.

The stationary platen 12 is fixed to the frame 11. A stationary mold 14 is attached to a surface opposing the movable platen 13 in the stationary platen 12.

The movable platen 13 is movable forward and rearward with respect to the stationary platen 12. A movable mold 15 is attached to a surface opposing the stationary platen 12 in the movable platen 13. The stationary mold 14 and the movable mold 15 configure a mold unit 16.

The mold space adjustment unit 40 performs mold space adjustment in accordance with thickness of the mold unit 16 when the mold closing is completed, and for example, adjusts an angle formed between the short link 21 and the long link 22 when the mold closing is completed to be a desired angle.

The mold space adjustment unit 40 has a support block 42 which is movable along a main guide 17 which is laid on the frame 11, and moves forward and rearward together with the movable platen 13 when the mold is opened and closed.

The short link 21 is connected to the stationary platen 12 via a stationary side pin 24, and is rotatable about the stationary side pin 24 with respect to the stationary platen 12. The short link 21 is connected to the long link 22 which is longer than the short link 21, via a link pin 26. The short link 21 and the long link 22 are relatively rotatable about the link pin 26.

The long link 22 is configured to have a first link 22a and a second link 22b, for example. The first link 22a and the second link 22b are connected to each other via a connection pin 27, and are relatively rotatable about the connection pin 27.

The first link 22a is connected to the short link 21 via the link pin 26, and is relatively rotatable about the link pin 26 with respect to the short link 21. The first link 22a may be longer than the short link 21.

The second link 22b is connected to the mold space adj ustment unit 40 via a movable side pin 25, and is rotatable about the movable side pin 25 with respect to the mold space adjustment unit 40. The second link 22b may have approximately the same length as that of the short link 21. A projection 22c which is perpendicular to the longitudinal direction of the second link 22b is disposed in the second link 22b.

The short link 21 and the long link 22 may be reversely arranged. That is, the short link 21 may be connected to the mold space adjustment unit 40 via the movable side pin 25, and the long link 22 may be connected to the stationary platen 12 via the stationary side pin 24.

The push rod 23 is relatively rotatable about the link pin 26 with respect to the short link 21 and the long link 22, respectively. In addition, the push rod 23 is connected to a slider 32 via a slider pin 34, and is rotatable about the slider pin 34 with respect to the slider 32. The push rod 23 may have approximately the same length as that of the short link 21.

The mold clamping motor 31 includes a ball screw mechanism serving as a motion converter which converts rotary motion to linear motion. The mold clamping motor 31 causes the slider 32 to move forward and rearward along the slider guider 33 laid on the frame 11, and causes the short link 21 and the long link 22 to be relatively rotated about the link pin 26.

The first link lock mechanism 60 is configured to have a locking portion 63 which is movable between a locking position for restricting rotation of the second link 22b with respect to the mold space adjustment unit 40 and a locking release position for releasing the restriction. The movement direction of the locking portion 63 is a direction perpendicular to a paper surface of the drawing, for example. If the locking portion 63 is moved to the locking position from the locking release position, a tilted surface 63a (refer to Fig. 4) of the locking portion 63 comes into contact with the projection 22c, and presses the second link 22b against a stopper 41b formed in the main body 41 of the mold space adjustment unit 40. This restricts the rotation of the second link 22b with respect to the mold space adjustment unit 40. In contrast, if the locking portion 63 is moved from the locking position to the locking release position, the locking portion 63 is retracted from a rotation path of the second link 22b. This allows the rotation of the second link 22b with respect to the mold space adjustment unit 40.

The first link lock mechanism 60 may be in the locking state for restricting the rotation of the second link 22b with respect to the mold space adjustment unit 40 during the injection molding, and may be in the locking release state during the mold change. As illustrated in Fig. 3, the long link 22 and the short link 21 are overlapped with each other on a straight line in a side view, and thus, it is possible to suppress generation of rotational moment. In addition, as illustrated in Fig. 4, the first link 22a can be retracted further downward than the mold unit 16 during the mold change. Thus, another mold unit can be laterally inserted into a portion between the movable platen 13 and the stationary platen 12. This saves the time and effort for hoisting the mold unit by a crane, thereby leading to a shortened time period for the mold change.

The platen lock mechanism 70 can switch states between the locking state for restricting the movement of the movable platen 13 with respect to the stationary platen 12 and the locking release state for releasing the restriction. The platen lock mechanism 70 is disposed in the mold space adjustment unit 40, for example, and is configured to have a guide clamper which clamps the main guide 17.

The platen lock mechanism 70 may be in the locking release state during the injection molding, and may be in the locking state during the mold change. During the injection molding, the movable platen 13 can be retracted to perform the mold closing, the mold clamping and the mold opening. In addition, during the mold change, while a distance between the movable platen 13 and the stationary platen 12 remains constant, the first link 22a can be retracted further downward than the mold unit 16. The distance between the stationary platen 12 and the movable platen 13 is minimized, and the movement time for the movable platen 13 is shortened, thereby leading to a shortened time period for the mold change.

Next, referring back to Figs. 1 to 3, an operation during the injection molding of the injection molding machine 10 having the above-described configuration will be described. During the injection molding, the first link lock mechanism 60 is in the locking state and the platen lock mechanism 70 is in the locking release state.

In a state where the mold opening is completed as illustrated in Fig. 1, if the mold clamping motor 31 is driven to move the slider 32 forward, the short link 21 is rotated about the stationary side pin 24. At this time, the first link 22a moves forward while being rotated about the connection pin 27, the movable platen 13 moves forward, and the mold closing is performed. If the movable mold 15 comes into contact with the stationary mold 14, the mold closing is completed.

When the mold closing is completed, the short link 21 and the first link 22a are in a state immediately before being overlapped with each other on a substantially straight line as illustrated in Fig. 2. When the mold closing is completed, the short link 21 and the long link 22 are seldom stretched in the longitudinal direction, thereby having a natural length.

In a state where the mold closing is completed, if the mold clamping motor 31 is driven to further move the slider 32 forward, the short link 21 and the long link 22 are overlapped on substantially the straight line as illustrated in Fig. 3. The short link 21 is shrunk to have a length shorter than the natural length, and the long link 22 is stretched to have a length longer than the natural length. Mold clamping force multiplied by toggle magnification to drive force of the mold clamping motor 31 is generated.

In a state where the mold clamping is completed, a cavity space is formed between the stationary mold 14 and the movable mold 15. An injection device fills the cavity space with a liquid molding material (for example, molten resin), and the filled molding material is solidified to be a molded product.

Subsequently, if the mold clamping motor 31 is driven to cause the slider 32 to move rearward, the short link 21 is rotated about the stationary side pin 24. At this time, the first link 22a moves rearward while being rotated about the connection pin 27, and the movable platen 13 moves rearward to perform the mold opening.

After the mold opening is completed, an ejector unit thrusts the molded product out from the mold unit 16. The molded product which is thrust out is unloaded out from the injection molding machine 10 by a take-out robot.

Next, referring to Fig. 4, an operation during the mold change of the injection molding machine 10 having the above-described configuration will be described. First, in a state where the mold closing is completed (state illustrated in Fig. 2), the first link lock mechanism 60 is switched over from the locking state to the locking release state, and the platen lock mechanism 70 is switched over from the locking release state to the locking state.

Thereafter, if the mold clamping motor 31 causes the slider 32 to move rearward, the short link 21 is rotated about the stationary side pin 24. At this time, the second link 22b is rotated about the movable side pin 25, and the first link 22a is retracted below the mold unit 16 by gravity as illustrated in Fig. 4.

Then, a worker unfixes the movable mold 15 from the movable platen 13, and unfixes the stationary mold 14 from the stationary platen 12. Thereafter, the worker laterally inserts another mold unit into a portion between the movable platen 13 and the stationary platen 12, and pushes the original mold unit out by using this other mold unit. Subsequently, the worker fixes the inserted movable mold to the movable platen 13, and fixes the inserted stationary mold to the stationary platen 12 by using bolts or the like, respectively.

In the present embodiment, the mold change is performed in a state where the mold closing is completed. However, the mold change may be performed in a state where the mold unit 16 is slightly opened.

Following the mold change, the mold space adjustment unit 40 performs mold space adjustment. For example, the mold space adjustment unit 40 is configured to include the main body 41; the support block 42 serving as a support for supporting the main body 41; an adjustment rod 43 which connects the main body 41 and the movable platen 13 in the mold opening and closing direction by leaving a distance; an adjustment nut 45 screwed to a screw shaft 44 formed in the adjustment rod 43; and an adjustment motor which rotates the adjustment nut 45.

The main body 41 is arranged behind the movable platen 13. The main body 41 has a load receiving portion 41a to which the long link 22 (more specifically, the second link 22b) is rotatably attached via the movable side pin 25. If the mold clamping motor 31 is driven, the load receiving portion 41a is pressed and the movable platen 13 is pressed.

The distance between the main body 41 and the movable platen 13 in the mold opening and closing direction is variable. Accordingly, the main body 41 and the movable platen 13 are separately formed. Therefore, distortion of the main body 41 due to the mold clamping force or thermal stress is unlikely to influence the movable platen 13. The distortion of the movable platen 13 can be suppressed, thereby improving parallelism between the movable platen 13 and the stationary platen 12.

The adjustment rod 43 may be arranged within a region where the movable mold 15 to be attached to the movable platen 13 is extended in the mold opening and closing direction (longitudinal direction). During the mold clamping, a portion where the adjustment rod 43 presses the movable platen 13 forward is pressed back rearward by the movable mold 15, thereby enabling warping of the movable platen 13 to be suppressed. A plurality of adjustment rods 43 may be symmetrically arranged about a center line of the movable mold 15. The number of adjustment rods 43 may be one. In this case, the center line of the adjustment rod 43 and the center line of the movable mold 15 may be coaxially arranged.

An adjustment nut 45 is disposed for each adjustment rod 43, and is rotatably attached to the main body 41 so as not to be capable of reciprocating. If each adjustment nut 45 is rotated, it is possible to adjust a position of the main body 41 with respect to each adjustment rod 43, and it is possible to adjust the distance between the main body 41 and the movable platen 13. Accordingly, an angle formed between the short link 21 and the long link 22 when the mold closing is completed can be adjusted so as to be a desired angle.

The support block 42 is disposed between the main body 41 and the frame 11, and is movable along the main guide 17 laid on the frame 11. The main body 41 is fixed onto the support block 42, and the support block 42 supports the main body 41 from below.

The support block 42 is longer than the main body 41 in the mold opening and closing direction (longitudinal direction) . Accordingly, as compared to a case where the length of the support block in the longitudinal direction is approximately the same as the length of the main body in the longitudinal direction, a posture of the support block 42 with respect to the frame 11 is stabilized. It is possible to suppress tilting of the main body 41 to the frame 11, and it is possible to suppress tilting of the movable platen 13 to the frame 11. The parallelism between the movable mold 15 and the stationary mold 14 is improved, and balance of the mold clamping force is improved.

A portion of the support block 42 is arranged between the movable platen 13 and the frame 11, and a support guide 46 which supports the movable platen 13 to be movable in the mold opening and closing direction is fixed onto an upper surface of the support block 42. As compared to a case where the movable platen is supported by the main body via the adjustment rod in a cantilever manner, the posture of the movable platen 13 with respect to the frame 11 is stabilized, and the balance of the mold clamping force is improved. In addition, the weight of the movable platen 13 and the weight of the main body 41 are applied to multiple positions on the support block 42, thereby further stabilizing the posture of the support block 42 with respect to the frame 11.

### Second Embodiment

The support guide 46 supports the movable platen 13 from below in the above-described first embodiment. In contrast, the present embodiment is different from the first embodiment in that the support guide laterally supports the movable platen. Hereinafter, the different points will be mainly described.

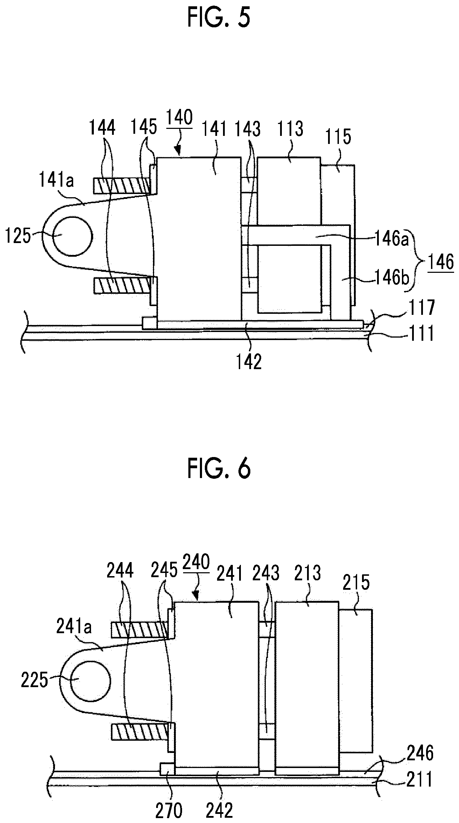

Fig. 5 illustrates a mold space adjustment unit and a movable platen according to the second embodiment of the present invention . For example, a mold space adjustment unit 140 is configured to include a main body 141; a support block 142 serving as a support for supporting the main body 141; an adjustment rod 143 which connects the main body 141 and a movable platen 113 in the mold opening and closing direction by leaving a distance; an adj ustment nut 145 screwed to a screw shaft 144 formed in the adjustment rod 143; and an adjustment motor which rotates the adjustment nut 145.

The main body 141 is arranged behind the movable platen 113. The main body 141 has a load receiving portion 141a to which the long link is rotatably attached via a movable side pin 125. If a mold clamping motor is driven, the load receiving portion 141a is pressed and the movable platen 113 is pressed.

The distance between the main body 141 and the movable platen 113 in the mold opening and closing direction is variable. Accordingly, the main body 141 and the movable platen 113 are separately formed. Therefore, distortion of the main body 141 due to the mold clamping force or thermal stress is unlikely to influence the movable platen 113. The distortion of the movable platen 113 can be suppressed, thereby improving parallelism between the movable platen 113 and the stationary platen.

An adjustment rod 143 may be arranged within a region where a movable mold 115 to be attached to the movable platen 113 is extended in the mold opening and closing direction (longitudinal direction). During the mold clamping, a portion where the adjustment rod 143 presses the movable platen 113 forward is pressed back rearward by the movable mold 115, thereby enabling warping of the movable platen 113 to be suppressed. A plurality of adjustment rods 143 may be symmetrically arranged about a center line of the movable mold 115. The number of adjustment rods 143 may be one. In this case, the center line of the adjustment rod 143 and the center line of the movable mold 115 maybe coaxially arranged.

An adjustment nut 145 is disposed for each adjustment rod 143, and is rotatably attached to the main body 141 so as not to be capable of reciprocating. If each adjustment nut 145 is rotated, it is possible to adjust a position of the main body 141 with respect to each adjustment rod 143, and it is possible to adjust the distance between the main body 141 and the movable platen 113. Accordingly, an angle formed between the short link and the long link when the mold closing is completed can be adjusted so as to be a desired angle.

A support block 142 is disposed between the main body 141 and a frame 111, and is movable along a main guide 117 laid on the frame 111. The main body 141 is fixed onto a support block 142, and the support block 142 supports the main body 141 from below.

The support block 142 is longer than the main body 141 in the mold opening and closing direction (longitudinal direction) . Accordingly, as compared to a case where the length of the support block in the longitudinal direction is approximately the same as the length of the main body in the longitudinal direction, a posture of the support block 142 with respect to the frame 111 is stabilized. It is possible to suppress tilting of the main body 141 to the frame 111, and it is possible to suppress tilting of the movable platen 113 to the frame 111. The parallelism between the movable mold 115 and the stationary mold is improved, and balance of the mold clamping force is improved.

A portion of the support block 142 is arranged between the movable platen 113 and the frame 111, and a support guide 146 which supports the movable platen 113 to be movable in the mold opening and closing direction is fixed to the support block 142. The weight of the movable platen 113 and the weight of the main body 141 are applied to multiple positions on the support block 142, thereby further stabilizing the posture of the support block 142 with respect to the frame 111.

For example, the support guide 146 is configured to include a beam 146a which extends from the main body 141 in the mold opening and closing direction (forward) and a column 146b which connects a distal end portion of the beam 146a and the support block 142. The beam 146a laterally supports the movable platen 113. A guide groove into which the beam 146a is inserted is formed on a side surface of the movable platen 113. As compared to a case where the movable platen is supported only by the adjustment rod in the cantilever manner, a posture of the movable platen 113 with respect to the frame 111 is stabilized, and the balance of the mold clamping force is improved.

In the present embodiment, the guide groove into which the beam 146a is inserted is formed on the side surface of the movable platen 113. However, a guide groove into which a convex portion to be formed on the side surface of the movable platen 113 is inserted may be formed on a side surface of the beam 146a.

In the present embodiment, the support guide 146 is configured to include the beam 146a and the column 146b. However, without disposing the column 146b, only the beam 146a may configure the support guide 146. As compared to a case where the movable platen is supported only by the adjustment rod in the cantilever manner, the presence of the beam 146a stabilizes the posture of the movable platen 113 with respect to the frame 111, thereby improving the balance of the mold clamping force.

### Third Embodiment

In the above-described first embodiment, the support guide 46 which supports the movable platen 13 to be movable in the mold opening and closing direction is disposed on the support block 42. In contrast, the present embodiment, which does not form part of the present invention, is different from the first embodiment in that the support guide is disposed on the frame. Hereinafter, the different points will be mainly described.

Fig. 6 illustrates a mold space adj ustment unit and a movable platen according to the third embodiment of the present invention . For example, a mold space adjustment unit 240 is configured to include a main body 241; a support block 242 serving as a support for supporting the main body 241; an adjustment rod 243 which connects the main body 241 and a movable platen 213 in the mold opening and closing direction by leaving a distance; an adj ustment nut 245 screwed to a screw shaft 244 formed in the adjustment rod 243; and an adjustment motor which rotates the adjustment nut 245.

The main body 241 has a load receiving portion 241a to which the long link is rotatably attached via a movable side pin 225. If a mold clamping motor is driven, the load receiving portion 241a is pressed and the movable platen 213 is pressed.

The distance between the main body 241 and the movable platen 213 in the mold opening and closing direction is variable. Accordingly, the main body 241 and the movable platen 213 are separately formed. Therefore, distortion of the main body 241 due to the mold clamping force or thermal stress is unlikely to influence the movable platen 213. The distortion of the movable platen 213 can be suppressed, thereby improving parallelism between the movable platen 213 and the stationary platen.

The adjustment rod 243 may be arranged within a region where a movable mold 215 to be attached to the movable platen 213 is extended in the mold opening and closing direction (longitudinal direction). During the mold clamping, a portion where the adjustment rod 243 presses the movable platen 213 forward is pressed back rearward by the movable mold 215, thereby enabling warping of the movable platen 213 to be suppressed. A plurality of adjustment rods 243 may be symmetrically arranged about a center line of the movable mold 215. The number of adjustment rods 243 may be one. In this case, the center line of the adjustment rod 243 and the center line of the movable mold 215 may be coaxially arranged.

The adjustment nut 245 is disposed for each adjustment rod 243, and is rotatably attached to the main body 241 so as not to be capable of reciprocating. If each adjustment nut 245 is rotated, it is possible to adjust a position of the main body 241 with respect to each adjustment rod 243, and it is possible to adjust the distance between the main body 241 and the movable platen 213. Accordingly, an angle formed between the short link and the long link when the mold closing is completed can be adjusted so as to be a desired angle.

A support block 242 is disposed between the main body 241 and a frame 211, and is movable along a support guide 246 laid on the frame 211. The main body 241 is fixed onto the support block 242.

The support guide 246 supports the movable platen 213 to be movable in the mold opening and closing direction. As compared to a case where there is a gap between the support guide and the movable platen and the movable platen is supported by the main body via the adjustment rod in the cantilever manner, a posture of the movable platen 213 with respect to the frame 211 is stabilized, and the balance of the mold clamping force is improved.

The support guide 246 supports the movable platen 213 and the main body 241 so as to be independently movable. A platen lock mechanism 270 configured to have a guide clamper which clamps the support guide 246 may be disposed in the mold space adjustment unit 240 as illustrated in Fig. 6, for example, or may be disposed in the movable platen 213.

Hitherto, the embodiments of the injection molding machine have been described. However, without being limited to the above-described embodiments, the present invention can be modified and improved in various ways within the scope of the present invention defined in the appended claims.

For example, the mold space adjustment unit of the above-described embodiments has the main body which is connected to the movable platen by leaving a distance in the mold opening and closing direction. However, the mold space adjustment unit may have the main body which is connected to the stationary platen by leaving a distance in the mold opening and closing direction. In this case, the main body of the mold space adjustment unit may be disposed in the stationary platen. In this case, the short link is rotatably attached to the main body of the mold space adjustment unit via the stationary side pin, and the support which supports the main body from below is fixed to the frame. The guide which supports the stationary platen to be movable in the mold opening and closing direction may be fixed to the support of the mold space adjustment unit to be fixed to the frame, for example. The injection molding machine may have both of the mold space adjustment unit connected to the movable platen and the mold space adjustment unit connected to the stationary platen.

In addition, the injection molding machine of the above-described embodiments has the short link, the long link and the push rod as a transmission mechanism which transmits a drive force of the mold clamping motor to the movable platen. However, the configuration of the transmission mechanism is not particularly limited. For example, the push rod 23 of the above-described embodiments is connected to the short link 21 and the long link 22 respectively so as to be relatively rotatable about the link pin 26, but may be connected to any one of the short link 21 and the long link 22 so as to be relatively rotatable about a pin different from the link pin 26. In addition, the long link 22 of the above-described embodiments is configured to have the first link 22a and the second link 22b, but may be configured to have one link. Furthermore, as the transmission mechanism, the injection molding machine may have a toggle mechanism instead of the short link 21, the long link 22 and the push rod 23. For example, when the main body of the mold space adj ustment unit is connected to the movable platen by leaving a distance in the mold opening and closing direction, the toggle mechanism is arranged between the main body of the mold space adjustment unit and a toggle support. In addition, when the main body of the mold space adjustment unit is connected to the stationary platen by leaving a distance in the mold opening and closing direction, the toggle mechanism is arranged between the movable platen and the toggle support. In addition, the toggle mechanism may be arranged between one end portion of a C-type frame and the movable platen. In this case, the main body of the mold space adjustment unit may be arranged between the toggle mechanism and the movable platen, or may be arranged between the other end portion of the C-type frame and the stationary platen.

In addition, instead of the first link lock mechanism 60, the injection molding machine of the above-described embodiments may include a second link lock mechanism which switches states between the locking state for restricting the relative rotation of the first link 22a and the second link 22b and the locking release state. The second link lock mechanism is in the locking state during the injection molding and is in the locking release state during the mold change. During the mold clamping, the long link 22 and the short link 21 are overlapped with each other on the straight line in a side view. In addition, during the mold change, the first link 22a can be retracted further downward than the mold unit 16. Thus, another mold unit can be laterally inserted into a portion between the movable platen 13 and the stationary platen 12. This saves the time and effort for hoisting the mold unit by a crane, thereby leading to a shortened time period for the mold change. The injection molding machine may include both of the first link lock mechanism 60 and the second link lock mechanism.

## Claims

1. An injection molding machine (10) comprising:
a platen (13) to which a mold (15) is attached; and
a mold space adjustment unit (40) that performs mold space adjustment,
wherein the mold space adjustment unit (40) includes a main body (41) which is connected to the platen (13) by leaving a distance in a mold opening and closing direction, and a support (42) which supports the main body (41),
**characterized in that**
the support has a support guide (46) that movably supports the platen (13) in the mold opening and closing direction,
the support (42) is fixed to the main body (41),
and that the support (42) is longer than the main body (41) in the mold opening and closing direction.

2. The injection molding machine (10) according to claim 1, further comprising:
a platen lock mechanism (70) which can switch states between a locking state for restricting a movement of a movable platen (13) to which a movable mold (15) is attached and a locking release state for releasing the restriction, with respect to a stationary platen (12) to which a stationary mold (14) is attached.

## Patentansprüche

1. Spritzgießmaschine (10), umfassend:
einen Formträger (13), an dem eine Form (15) befestigt ist; und
eine Formraum-Einstelleinheit (40), die eine Formraumeinstellung durchführt,
wobei die Formraum-Einstelleinheit (40) einen Hauptkörper (41), der mit dem Formträger (13) verbunden ist, indem in einer Richtung des Öffnens und Schließens der Form ein Abstand belassen wird, und einen Träger (42), der den Hauptkörper (41) trägt, umfasst,
**dadurch gekennzeichnet, dass**
der Träger eine Trägerführung (46) aufweist, die den Formträger (13) in der Richtung des Öffnens und Schließens der Form beweglich trägt,
der Träger (42) am Hauptkörper (41) fixiert ist und
der Träger (42) in Richtung des Öffnens und Schließens der Form länger als der Hauptkörper (41) ist.

2. Spritzgießmaschine (10) nach Anspruch 1, ferner umfassend:
einen Formträger-Verriegelungsmechanismus (70), der Zustände zwischen einem Verriegelungszustand zum Beschränken einer Bewegung eines beweglichen Formträgers, an dem eine bewegliche Form (15) befestigt ist, und einem Verriegelungsfreigabezustand zum Freigeben der Beschränkung in Bezug auf einen stationären Formträger (12), an dem eine stationäre Form (14) befestigt ist, umschalten kann.

## Revendications

1. Une machine de moulage par injection (10) comprenant :
un plateau (13) sur lequel un moule (15) est fixé ; et
une unité d'ajustement d'espace de moule (40) qui réalise l'ajustement d'espace de moule,
dans laquelle l'unité d'ajustement d'espace de moule (40) comprend un corps principal (41) qui est raccordé au plateau (13) en laissant une distance dans une direction d'ouverture et de fermeture de moule, et un support (42) qui supporte le corps principal (41),
**caractérisée en ce que** :
le support a un guide de support (46) qui supporte, de manière mobile, le plateau (13) dans la direction d'ouverture et de fermeture de moule,
le support (42) est fixé au corps principal (41),
et **en ce que** le support (42) est plus long que le corps principal (41) dans la direction d'ouverture et de fermeture de moule.

2. Machine de moulage par injection (10) selon la revendication 1, comprenant en outre :
un mécanisme de verrouillage de plateau (70) qui peut commuter des états entre un état de verrouillage pour limiter un mouvement d'un plateau mobile (13) sur lequel un moule mobile (15) est fixé, et un état de déverrouillage pour libérer la restriction, par rapport à un plateau fixe (12) sur lequel un moule fixe (14) est fixé.
